(19) **Europäisches Patentamt**

**European Patent Office**

**Office européen des brevets**

(11) **EP 1 614 715 A1**

(12) **EUROPEAN PATENT APPLICATION**
published in accordance with Art. 158(3) EPC

(43) Date of publication:
**11.01.2006 Bulletin 2006/02**

(51) Int Cl.:
**C08L 67/02** (1985.01)

(21) Application number: **04724200.3**

(22) Date of filing: **29.03.2004**

(86) International application number:
**PCT/JP2004/004476**

(87) International publication number:
**WO 2004/092267 (28.10.2004 Gazette 2004/44)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **14.04.2003 JP 2003108734**

(71) Applicant: **KANEKA CORPORATION**
**Osaka-shi, Osaka 530-8288 (JP)**

(72) Inventors:
• **TAKAKI, Akira,**
**c/o Kaneka Corporation**
**Settsu-shi,**
**Osaka 5660072 (JP)**
• **MICHINOBU, Takao,**
**c/o Kaneka Corporation**
**Settsu-shi,**
**Osaka 566-0072 (JP)**

(74) Representative: **Vossius & Partner**
**Siebertstrasse 4**
**81675 München (DE)**

(54) **POLYESTER RESIN COMPOSITION**

(57)     The present invention provides a thermoplastic polyester resin composition having excellent flexural modulus, heat resistance, and impact resistance. Namely, the present invention provides a thermoplastic polyester resin composition containing 95 to 55% by weight of a thermoplastic polyester resin (A), 0.2 to 50% by weight of an inorganic filler (B), and 0.5 to 9% by weight of a polyorganosiloxane-containing graft polymer (C).

EP 1 614 715 A1

**Description**

Technical Field

The present invention relates to a thermoplastic polyester resin composition containing a thermoplastic polyester resin, an inorganic filler, and a graft copolymer containing polyorganosiloxane.

Background Art

Thermoplastic polyester resins such as polyethylene terephthalate are excellent in heat resistance, chemical resistance, weather resistance, mechanical properties, electric properties, and the like, and are thus widely used as injection molding materials, fibers, and films in the industrial field.
In order to satisfy requirements for higher mechanical properties and heat resistance, various inorganic fillers are generally mixed (for example, Japanese Unexamined Patent Application Publication Nos. 10-259016 and 10-310420, etc.). However, it is known that the elastic modulus and heat resistance of a molding can be improved by mixing with an inorganic filler, but, at the same time, the impact resistance of the molding is significantly decreased in many cases.
It has been known from old times that mixing with a rubber-containing graft copolymer is effective in improving the impact resistance of a thermoplastic polyester. For example, Japanese Unexamined Patent Application Publication No. 62-121752 discloses that impact resistance is improved by mixing a thermoplastic polyester with 20 to 90% by weight of a copolymer containing organosiloxane rubber and having a degree of toluene swelling of 3.0 to 15. However, this document also shows that mixing with the rubber-containing copolymer significantly decreases flexural modulus.
Therefore, it is very difficult to satisfy both the flexural modulus and impact resistance of a thermoplastic polyester, and there has been demand for the appearance of a thermoplastic polyester having high elastic modulus and heat resistance and high impact resistance on the market for a long time.
An object of the present invention is to provide a thermoplastic polyester resin composition having excellent flexural modulus and heat resistance and excellent impact resistance.

Summary of the Invention

As a result of intensive research for achieving the object, the inventors of the present invention achieved the present invention.
In other words, the present invention relates to the following:
A thermoplastic polyester resin composition containing 95 to 55% by weight of a thermoplastic polyester resin (A), 0.2 to 50% by weight of an inorganic filler (B), and 0.5 to 9% by weight of a graft polymer (C) containing polyorganosiloxane (claim 1).
The above-described thermoplastic polyester resin composition in which the graft polymer (C) containing polyorganosiloxane is prepared by polymerizing 0 to 10 parts by weight of monomers (d) including 100 to 50% by weight of a polyfunctional monomer (b) containing two or more polymerizable unsaturated bonds in its molecule and 0 to 50% by weight of another copolymerizable vinyl monomer (c) in the presence of 30 to 95 parts by weight of polyorganosiloxane (a), and then further polymerizing 5 to 70 parts by weight of a vinyl monomer (e) (100 parts by weight in total of (a), (d), and (e)) (claim 2).
The thermoplastic polyester resin composition in which the graft polymer (C) containing polyorganosiloxane is prepared by polymerizing 0.5 to 10 parts by weight of monomers (d) including 100 to 50% by weight of a polyfunctional monomer (b) containing two or more polymerizable unsaturated bonds in its molecule and 0 to 50% by weight of another copolymerizable vinyl monomer (c) in the presence of 30 to 95 parts by weight of polyorganosiloxane (a), and then further polymerizing 5 to 70 parts by weight of a vinyl monomer (e) (100 parts by weight in total of (a), (d), and (e)) (claim 3).
The thermoplastic polyester resin composition in which the vinyl monomer (e) contains an epoxy group-containing monomer (claim 4).

Detailed Disclosure of the Invention

The present invention provides a thermoplastic polyester resin composition including 95 to 55% by weight of a thermoplastic polyester resin (A), 0.2 to 50% by weight of an inorganic filler (B), and 0.5 to 9% by weight of a graft polymer (C) containing polyorganosiloxane, the resin composition having excellent flexural modulus and heat resistance and excellent impact resistance.
The thermoplastic polyester resin used in the present invention is any thermoplastic polyester resin prepared by reaction between an acid component mainly including a dicarboxylic acid compound and/or a dicarboxylic acid ester-forming derivative, and a diol component mainly including a diol compound and/or a diol compound ester=forming derivative.

The expression "mainly including" means that the ratio in the acid component or the diol component is 80% by weight or more and furthermore 90% by weight or more, and the upper limit is 100% by weight.

Specific examples of the thermoplastic polyester resin include polyethylene terephthalate, polypropylene terephthalate, polybutylene terephthalate, polyhexamethylene terephthalate, polycyclohexane-1,4-dimethyl terephthalate, neopentyl terephthalate, polyethylene isophthalate, polyethylene naphthalate, polybutylene naphthalate, and polyhexamethylene naphthalate, and copolymer polyesters produced using two or more acid components and/or diol components which are used for producing these resins.

The above-listed thermoplastic polyester resins can be used alone or in any combination of two or more of these in which the polyester resins have different compositions or components and/or different intrinsic viscosities. Among the polyester resins, from the viewpoint of strength, elastic modulus, cost, and the like, polyethylene terephthalate, polybutylene terephthalate, polycyclohexane-1,4-dimethyl terephthalate, and polyethylene naphthalate are preferred. The polyester resin is used in an amount of 55 to 95% by weight, preferably 65 to 95% by weight, more preferably 80 to 95% by weight in the resin composition. Within this range, the excellent characteristics of thermoplastic polyester, such as heat resistance, chemical resistance, mechanical properties, electric properties, and the like, can be sufficiently exhibited.

Examples of the inorganic filler used in the present invention include calcium carbonate, talc, mica, aluminum oxide, magnesium hydroxide, boron nitride, beryllium oxide, calcium silicate, and clay. Preferred examples of the inorganic filler include silicates, phosphates such as zirconium phosphate, titanates such as potassium titanate, tungstates such as sodium tungstate, uranates such as sodium uranate, vanadates such as potassium vanadate, molybdates such as magnesium molybdate, niobates such as potassium niobate, and layered compounds such as graphite. The inorganic filler is more preferably treated for improving dispersibility. Examples of layered compounds treated for improving dispersibility include layered silicates, such as montmorillonite, bentonite, and swelling mica containing sodium ions between layers, which are treated with a polyether compound containing a cyclic hydrocarbon group in a side chain and/or a main chain of a polyoxyalkylene compound, such as polyoxyethylene or poloxyethylene-polyoxypropylene copolymer.

In the present invention, the amount of the inorganic filler used is 0.2 to 50% by weight, preferably 1 to 30% b weight, and more preferably 2 to 15% by weight. When the amount is less than 0.2% by weight, the effect of improving the flexural modulus and heat resistance of the thermoplastic polyester may decrease. When the amount exceeds 50% by weight, the surface appearance and the like of a molded product may degrade.

The polyorganosiloxane-containing graft polymer (C) used in the present invention will be described. The composition and the like of the polyorganosiloxane-containing graft polymer (C) are not particularly limited. However, the polyorganosiloxane-containing graft polymer (C) is preferably produced by polymerizing 0 to 10 parts by weight of monomers (d) including 100 to 50% by weight of a polyfunctional monomer (b) having two or more polymerizable unsaturated bonds in its molecule and 0 to 50% by weight of another copolymerizable vinyl monomer (c) in the presence of 30 to 95 parts by weight of polyorganosiloxane (a), and further polymerizing 5 to 70 parts by weight of a vinyl monomer (e) (100 parts by weight in total of (a), (d), and (e)).

The polyorganosiloxane (a) used in the present invention can be produced by ordinary emulsion polymerization, but seed polymerization is preferably used from the viewpoint of the advantage that a particle size distribution in a latex state can be narrowed. A seed polymer used in seed polymerization is not limited to rubber components such as butyl acrylate rubber, butadiene rubber, butadiene-styrene rubber, and butadiene-acrylonitrile rubber. Polymers such as a butyl acrylate-styrene copolymer and a styrene-acrylonitrile copolymer may be used without problems. Furthermore, a chain transfer agent may be used in polymerization for the seed polymer.

In the polymerization for the polyorganosiloxane (a) used in the present invention, a grafting agent, and, if required, a crosslinking agent can be used.

The organosiloxane used has a structural unit represented by the formula $R_m SiO_{(4-m)/2}$ (wherein R represents a substituted or unsubstituted monovalent hydrocarbon group, and m represents an integer of 0 to 3) and also has a linear, branched, or cyclic structure. However, the organosiloxane preferably has a cyclic structure. Examples of a substituted or unsubstituted monovalent hydrocarbon group contained in the organosiloxane include methyl, ethyl, propyl, and phenyl, and these hydrocarbon groups substituted by a cyano group or the like. Specific examples of the organosiloxane include cyclic compounds, such as hexamethylcyclotrisiloxane (D3), octamethylcyclotetrasiloxane (D4), decamethylcyclopentasiloxane (D5), dodecamethylcyclohexasiloxane (D6), and trimethyltriphenylcyclotrisiloxane; and linear or branched organosiloxanes. These organosiloxanes may be used alone or in combination of two or more.

Examples of the grafting agent usable in the present invention include p-vinylphenylmethyl dimethoxysilane, p-vinylphenylethyl dimethoxysilane, 2-(p-vinylphenyl)ethylmethyl dimethoxysilane, 3-(p-vinylbenzoyloxy)propylmethyl dimethoxysilane, p-vinylphenylmethyl dimethoxysilane, vinylmethyl dimethoxysilane, tetravinyltetramethyl cyclosiloxane, allylmethyl dimethoxysilane, mercaptopropylmethyl dimethoxysilane, and methacryloxypropylmethyl dimethoxysilane.

The ratio of the grafting agent used is preferably 1 to 5% by weight relative to the amount of the organosiloxane.

When the amount of the grafting agent used is excessively large, the impact resistance of a final molding tends to decrease. When the amount of the grafting agent used is excessively small, large lumps tend to occur in coagulation and heat treatment, thereby failing to obtain a proper resin powder and decreasing the moldability of the final molding.

If required, the crosslinking agent can be used in synthesizing the polyorganosiloxane (a) used in the present invention. Examples of the crosslinking agent include trifunctional crosslinking agents, such as methyltrimethoxysilane, phenyltrimethoxysilane, and ethyltrimethoxysilane; and tetrafunctional crosslinking agents, such as tetraethoxysilane, 1,3-bis[2-(dirnethoxymethylsilyl)ethyl]benzene, 1,4-bis[2-(dimethoxymethylsilyl)ethyl]benzene, 1,3-bis[1-(dimethoxymethylsilyl)ethyl]benzene, 1,4-bis[1-(dimethoxymethylsilyl)ethyl]benzene, 1-[1-(dimethoxymethylsilyl) ethyl] -3-[2-(dimethoxymethylsilyl)ethyl]benzene, and 1-[1-(dimethoxymethylsilyl) ethyl] -4-[2-dimethoxymethylsilyl)ethyl]benzene. These crosslinking agents can be used alone or as a mixture of two or more. When the amount of the crosslinking agent added is excessively large, the flexibility of the polyorganosiloxane (a) degrades, and thus the impact resistance of a final molding decreases. As an index for the flexibility of the polyorganosiloxane (a), a degree of swelling measured with a toluene solvent can be used. Specifically, a degree of swelling of 15 or less indicates that the polyorganosiloxane has insufficient flexibility.

The average particle size of the polyorganosiloxane (a) in a latex state is preferably 0.008 to 0.6 $\mu$m and more preferably 0.08 to 0.4 $\mu$m. The polyorganosiloxane (a) having an average particle diameter less than 0.008 $\mu$m cannot be easily stably produced, and the polyorganosiloxane (a) having an average particle diameter over 0.6 $\mu$m may impair the impact resistance of the final molding.

Examples of the polyfunctional monomer (b) include allyl methacrylate, ethylene glycol dimethacrylate, 1,3-butylene glycol dimethacrylate, and divinylbenzene. These monomers may be used alone or in combination of two or more.

Examples of the copolymerizable monomer (c) include aromatic vinyl monomers, such as styrene and $\alpha$-methylstyrene; vinyl cyanide monomers, such as acrylonitrile; (meth)acrylate monomers, such as methyl acrylate, ethyl acrylate, methyl methacrylate, ethyl methacrylate, and butyl methacrylate; and vinyl monomers each containing an epoxy group in its molecule, such as glycidyl methacrylate. These monomers may be used alone or in combination of two or more.

The monomers (d) including the polyfunctional monomer (b) and the copolymerizable monomer (c) function to enable pulverization of a graft copolymer resin. The monomers (d) preferably include 50 to 100% by weight and more preferably 90 to 100% by weight of the polyfunctional monomer (b) and 0 to 50% by weight and more preferably 0 to 10% by weight of the copolymerizable monomer (c).

The amount of the monomers (d) used in producing the polyorganosiloxane-containing copolymer is preferably 0 to 10 parts by weight and more preferably 0.5 to 10 parts by weight. Although the powder state ameliorates as the amount of the monomers (d) used increases, an amount over 10 parts by weight may cause deterioration in impact resistance of the final molding.

In the present invention, the vinyl monomer (e) is a component used for securing compatibility between the graft copolymer and a thermoplastic polyester resin and uniformly dispersing the graft copolymer. For example, the same monomer as the copolymerizable monomer (c) can be used as the vinyl monomer (e). Specific examples of the vinyl monomer (e) include aromatic vinyl monomers, such as styrene and $\alpha$-methylstyrene; vinyl cyanide monomers, such as acrylonitrile; (meth)acrylate monomers, such as methyl acrylate, ethyl acrylate, methyl methacrylate, ethyl methacrylate, and butyl methacrylate; and vinyl monomers each containing an epoxy group in its molecule, such as glycidyl methacrylate. These monomers may be used alone or in combination of two or more. In order to secure compatibility with the thermoplastic polyester resin, it is effective to contain an epoxy group-containing monomer.

Examples of a radical initiator used in the present invention include organic peroxides, such as cumene hydroperoxide, tert-butyl hydroperoxide, benzoyl peroxide, and tert-butylperoxyisopropyl carbonate; inorganic peroxides, such as potassium persulfate and ammonium persulfate; and azo compounds, such as 2,2'-azobisisobutyronitrile and 2,2'-azobis-2,4-dimethylvaleronitrile. When the polymerization is performed in a redox system using ferrous sulfate-sodium formaldehyde sulfoxylate-ethylenediamine tetraacetic acid disodium salt, ferrous sulfate-glucose-sodium pyrophosphate, or ferrous sulfate-sodium pyrophosphate-sodium phosphate, the polymerization is completed even at a low polymerization temperature.

An example of a method for separating a polymer from the polyorganosiloxane-containing graft copolymer (C) latex produced by emulsion polymerization is to coagulate the latex by adding a metal salt such as calcium chloride, magnesium chloride, or magnesium sulfate to the latex, followed by separation, water washing, dehydration, and drying. A spray drying method can also be used.

The resultant polyorganosiloxane-containing graft copolymer (C) is mixed with a thermoplastic polyester resin, an inorganic filler, and the like. The amount of the polyorganosiloxane-containing graft copolymer (C) mixed must be 0.5 to 9% by weight and is preferably 5 to 8% by weight relative to the resin composition. With the amount less than 0.5% by weight, the effect of improving impact resistance decreases, while with the amount over 9% by weight, the flexural modulus of the final molding decreases to the level of the original thermoplastic polyester.

The process for producing the polyester resin composition of the present invention is not particularly limited, and, for example, the thermoplastic polyester resin is melt-kneaded using any one of various general kneaders. Examples of the kneaders include a single-screw extruder, a twin-screw extruder, a roller, a Banbury mixer, and a kneader. In particular, a kneader with a high shearing efficiency is preferred. The thermoplastic polyester resin, the inorganic filler, and the polyorganosiloxane-containing graft polymer may be simultaneously charged into the kneader and melt-kneaded. Alternatively, the inorganic filler may be added to the thermoplastic polyester resin and the polyorganosiloxane-containing graft polymer which are previously melted, and the resultant mixture may be melt-kneaded.

If required, the polyester resin composition of the present invention may be combined with another desired thermoplastic resin or thermosetting resin within a range in which characteristics such as mechanical properties are not impaired. Examples of such a resin include unsaturated polyester resins, polyester carbonate resins; liquid crystal polyester resins, polyolefin resins, polyamide resins, rubbery polymer-reinforced styrene resins, polyphenylene sulfide resins, polyphenylene ether resins, polyacetal resins, polysulfone resins, and polyarylate resins. These resins may be used alone or in combination or two or more.

Furthermore, additives, such as a pigment or dye, a thermostabilizer, an antioxidant, an ultraviolet absorber, a photostabilizer, a lubricant, a plasticizer, a flame retardant, and an antistatic agent can be added according to purposes.

The polyester resin composition produced in the present invention may be molded by injection molding, heat press molding, or blow molding. The resulting molded product has excellent appearance, mechanical properties, thermal deformation resistance, and the like, and are thus suitably used for automobile parts, household electric appliance parts, household articles, packaging materials, and other general industrial materials.

Best Mode for Carrying Out the Invention

The present invention will be described in detail below with reference to examples, but the present invention is not limited to these examples. In the examples and comparative examples below, measurements and tests were carried out as follows:

[Polymerization conversion rate]

A latex was dried with a hot-air dryer at 120°C for 1 hour to determine the solid content, and the polymerization conversion rate was calculated by the equation, $100 \times$ solid content/amount of monomers charged (%).

[Volume-average particle diameter]

The volume-average particle diameters ($\mu$m) of a seed polymer, polyorganosiloxane particles, and a graft copolymer were measured in a latex state by a light scattering method using MICROTRAC UPA manufactured by LEED & NORTHRUP INSTRUMENTS Co., Ltd.

[Degree of swelling]

The prepared polyorganosiloxane latex was added to an about 3-5 times amount of isopropyl alcohol under stirring to break and coagulate the emulsion, thereby obtaining a siloxane polymer. The resultant polymer was washed with water and then dried under reduced pressure at 80°C for 10 hours. Then, about 1 g of the polymer was precisely weighed (weight 1), immersed in about 30 g of toluene, and allowed to stand at 25°C for 100 hours to swell the polymer with toluene. Next, the residual toluene was decanted, and the swelled polymer was precisely weighed (weight 2). Then, the polymer was dried under reduced pressure at 80°C for 16 hours to evaporate the absorbed toluene, followed by precise weighing (weight 3). The degree of swelling was calculated by the following equation:

```
Degree of swelling = ((weight 2) - (weight 1)/(weight
1))
```

[Impact resistance]

According to ASTM D-256, impact resistance was evaluated by an Izod test using a notched 1/8-inch bar at -10°C.

[HDT]

According to ASTM D-648, HDT was measured using a 1/4-inch bar with a load of 4.6 Kg/cm$^2$.

(Examples 1 to 3 and Comparative Examples 1 to 6)

In a five-necked flask provided with a stirrer, a reflux condenser, a nitrogen blowing port, a monomer addition port, and a thermometer, 300 parts by weight of pure water and 8 parts by weight (solid content) of sodium dodecylbenzenesulfonate (SDBS) were mixed, and the resultant mixture was heated to 50°C. After the liquid temperature reached 50°C, nitrogen purge was performed. Then, 10 parts by weight of butyl acrylate, 3 parts by weight of tert-dodecyl mercaptan, and 0.01 part by weight of paramenthane hydroperoxide were added.

Thirty minutes after, 0.002 part by weight of ferrous sulfate (FeSO$_4$·7H$_2$O), 0.005 part by weight of ethylenediamine tetraacetic acid disodium salt, and 0.2 part by weight of sodium formaldehyde sulfoxylate were added, and polymerization was further performed for 1 hour. Then, a mixture of 90 parts by weight of butyl acrylate, 27 parts by weight of tert-dodecyl mercaptan, and 0.1 part by weight of paramenthane hydroperoxide was continuously added over 3 hours. Postpolymerization was performed for 2 hours to produce a seed polymer latex (seed 1) having a volume-average particle diameter of 0.03 μm.

In a five-necked flask provided with a stirrer, a reflux condenser, a nitrogen blowing port, a monomer addition port, and a thermometer, 2 parts by weight (solid content) of the seed polymer (seed 1) was charged. Then, a mixture of 300 parts by weight of pure water, 0.5 part by weight (solid content) of SDBS, 95 parts by weight of octamethyl cyclotetrasiloxane, and 5 parts by weight of mercaptopropyl dimethoxymethylsilane (MPDS) was stirred with a homomixer at 7000 rpm for 5 minutes to prepare an emulsion, and the resultant emulsion was added to the flask at a time.

Next, 1 part by weight (solid content) of a 10% aqueous dodecylbenzenesulfonic acid solution was added, and the mixture was heated to 80°C under stirring in a nitrogen stream. After stirring was continued at 80°C for 6 hours, the mixture was cooled to 25°C and allowed to stand for 20 hours. Then, the pH was adjusted to 6.5 with sodium hydroxide to terminate polymerization, thereby obtaining a polyorganosiloxane latex. The degree of swelling with toluene is shown in Table 1.

In a five-necked flask provided with a stirrer, a reflux condenser, a nitrogen blowing port, a monomer addition port, and a thermometer, 240 parts by weight of pure water and 70 parts by weight (solid content) of the polyorganosiloxane particles were charged and heated to 40°C under stirring in a nitrogen stream. After the temperature reached 40°C, 0.2 part by weight of sodium formaldehyde sulfoxylate (SFS), 0.01 part by weight of disodium ethylenediamine tetraacetate (EDTA), and 0.0025 part by weight of ferrous sulfate were added, and then a mixture of 3 parts by weight of allyl methacrylate (ALMA) and 0.01 part by weight (solid content) of cumene hydroperoxide was added at a time, followed by stirring at 40°C for 1 hour. Next, a mixture of methyl methacrylate (MMA), glycidyl methacrylate (GMA), styrene (ST), and acrylonitrile (AN) in the amounts shown in Table 1 and 0.06 part by weight of cumene hydroperoxide was added dropwise over 1.5 hours. After the completion of addition, stirring was continued for 1 hour to produce a graft copolymer latex.

Next, the graft copolymer latex was diluted with pure water to a solid content of 15%, and then 4 parts by weight (solid content) of a 25% aqueous calcium chloride solution was added to produce a coagulated slurry. The resultant coagulated slurry was heated to 95°C, cooled to 50°C, dehydrated, and then dried to produce a powder (Samples A and B) of a polyorganosiloxane graft copolymer.

On the other hand, 100 parts by weight of ion-exchanged water and 8 parts by weight of swelling mica (trade name, Somasiff ME100 manufactured by CO-OP Chemical Co., Ltd.) were mixed. Then, 1.6 parts by weight of a polyether compound (trade name, Bisol 18EN manufactured by Toho Chemical Industry Co., Ltd.) was added to the resultant mixture and mixed for 15 to 30 minutes to treat the mica. Then, the mica was pulverized to prepare an inorganic filler treated with the polyether compound.

A thermoplastic resin (trade name, BELLPET EFG85A manufactured by Kanebo Ltd.), the inorganic filler, and the polyorganosiloxane graft copolymer at the weight ratios shown in Table 2 were melt-kneaded with a twin-screw extruder (TEX44 manufactured by Japan Steel Works, Ltd.) to prepare polyester resin compositions, and the physical properties of the compositions were evaluated. The results are shown in Table 2.

Table 1

(Table 1)

|  | Polyorganosiloxane pars by weight | Degree of swelling of polyorganosiloxane | Polyfunctional monomer parts by weight | Vinyl monomer parts by weight | Powder state |
|---|---|---|---|---|---|
| Sample A | 70 | ∞ (dissolved) | AlMA(3) | MMA(24) GMA(6) | good |
| Sample B | 70 | ∞ (dissolved) | AlMA(3) | ST(18) AN(12) | good |
| AlMA: allyl methacrylate, MMA: methyl methacrylate, GMA: glycidyl methacrylate, ST: styrene, AN: acrylonitrile | | | | | |

Table 2

| | Composition | | | | Physical properties of molded product | |
|---|---|---|---|---|---|---|
| | PET parts by weight | Inorganic filler parts by weight | Graft copolymer parts by weight | Flexural modulus (Mpa) | Izod impact strength (KJ/m$^2$) | HDT (°C) |
| Example 1 | 100(85.1) | 10(8.5) | Sample-A 7.5(6.4) | 3005 | 4 | 100 |
| Example 2 | 100(83.3) | 10(8.3) | Sample-A 10(8.3) | 2800 | 4.5 | 98 |
| Example 3 | 100(85.1) | 10(8.5) | Sample-B 7.5(6.4) | 3150 | 4.1 | 105 |
| Comp. Example 1 | 100(100) | 0(0) | 0(0) | 2800 | 2.9 | 89 |
| Comp. Example 2 | 100(93.0) | 0(0) | Sample-A 7.5(7.0) | 2450 | 4.2 | 90 |
| Comp. Example 3 | 100(90.9) | 0(0) | Sample-A 10(9.1) | 2315 | 5.5 | 90 |
| Comp. Example 4 | 100(88.5) | 0(0) | Sample-A 13(11.5) | 2170 | 6.5 | 90 |
| Comp. Example 5 | 100(90.9) | 10(9.1) | 0(0) | 3855 | 2.9 | 110 |
| Comp. Example 6 | 100(81.3) | 10(8.1) | Sample-A 13(10.6) | 2450 | 5.5 | 96 |

(): % by weight

EP 1 614 715 A1

Industrial Applicability

A thermoplastic polyester resin composition including 95 to 55% by weight of a thermoplastic polyester resin (A), 0.2 to 50% by weight of an inorganic filler (B), and 0.5 to 9% by weight of a polyorganosiloxane-containing graft polymer (C) exhibits excellent flexural modulus, heat resistance, and impact resistance.

## Claims

1.  A thermoplastic polyester resin composition comprising 95 to 55% by weight of a thermoplastic polyester resin (A), 0.2 to 50% by weight of an inorganic filler (B), and 0.5 to 9% by weight of a polyorganosiloxane-containing graft polymer (C).

2.  The thermoplastic polyester resin composition according to claim 1, wherein the polyorganosiloxane-containing graft polymer (C) is prepared by polymerizing 0 to 10 parts by weight of monomers (d) including 100 to 50% by weight of a polyfunctional monomer (b) containing two or more polymerizable unsaturated bonds in its molecule and 0 to 50% by weight of another copolymerizable vinyl monomer (c) in the presence of 30 to 95 parts by weight of polyorganosiloxane (a), and then further polymerizing 5 to 70 parts by weight of a vinyl monomer (e) (100 parts by weight in total of (a), (d), and (e)).

3.  The thermoplastic polyester resin composition according to claim 1, wherein the polyorganosiloxane-containing graft polymer (C) is prepared by polymerizing 0.5 to 10 parts by weight of monomers (d) including 100 to 50% by weight of a polyfunctional monomer (b) containing two or more polymerizable unsaturated bonds in its molecule and 0 to 50% by weight of another copolymerizable vinyl monomer (c) in the presence of 30 to 95 parts by weight of polyorganosiloxane (a), and then further polymerizing 5 to 70 parts by weight of a vinyl monomer (e) (100 parts by weight in total of (a), (d), and (e)).

4.  The thermoplastic polyester resin composition according to any one of claims 1 to 3, wherein the vinyl monomer (e) contains an epoxy group-containing monomer.

<div align="center">

**INTERNATIONAL SEARCH REPORT**

</div>

| | International application No. |
|---|---|
| | PCT/JP2004/004476 |

**A. CLASSIFICATION OF SUBJECT MATTER**
Int.Cl$^7$ C08L67/02

According to International Patent Classification (IPC) or to both national classification and IPC

**B. FIELDS SEARCHED**

Minimum documentation searched (classification system followed by classification symbols)
Int.Cl$^7$ C08L67/00-67/04

Documentation searched other than minimum documentation to the extent that such documents are included in the fields searched

| | | | |
|---|---|---|---|
| Jitsuyo Shinan Koho | 1926-2004 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5-25377 A (Mitsubishi Rayon Co., Ltd.), 02 February, 1993 (02.02.93), Column 1, lines 2 to 13; column 7, line 26 to column 8, line 3 (Family: none) | 1-4 |

☐ Further documents are listed in the continuation of Box C.       ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 April, 2004 (15.04.04) | 11 May, 2004 (11.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)